# EUROPÄISCHE PATENTSCHRIFT

(11) **EP 2 529 612 B1**
(45) Veröffentlichungstag und Bekanntmachung des Hinweises auf die Patenterteilung: **24.12.2014**
(21) Anmeldenummer: 12003776.7
(22) Anmeldetag: 12.05.2012
(51) Int. Cl.: A01D 34/82, A01D 75/18, A01D 75/20

(54) **Kreiselmähwerk mit Schutzeinrichtungen**
Rotary mower with protective devices
Faucheuse rotative avec dispositifs de protection

(30) Priorität: 28.05.2011 DE 202011101223 U
(43) Veröffentlichungstag der Anmeldung: 05.12.2012
(73) Patentinhaber: Maschinenfabrik Bernard Krone GmbH, 48480 Spelle (DE)
(72) Erfinder: Afting, Andreas, 48488 Emsbüren (DE); Lömker, Jens, 48496 Hopsten (DE)

(56) Entgegenhaltungen:
- EP-A1- 0 436 248
- DE-A1- 10 127 843
- DE-U1- 8 521 683
- DE-U1-202010 012 789
- US-A1- 2008 289 194

## Beschreibung

Die Erfindung betrifft ein Kreiselmähwerk mit Schutzeinrichtungen, welche derart angeordnet sind, dass sie Sicherheitseinrichtungen des Kreiselmähwerks zum Schutz gegen Wurfkörper und vor Berührung der Mähwerkzeuge vor Beschädigungen durch äußere Einflüsse schützen.

Kreiselmähwerke werden in vielfältigen Ausführungen, sowohl als Anbaumähwerke für Schlepper oder andere Trägerfahrzeuge als auch als selbstfahrende Arbeitsmaschinen, insbesondere in der Landwirtschaft und im Kommunalbereich, zum Mähen von Gras und anderen stängeligen Pflanzen eingesetzt. Durch die sehr bodennah mit hoher Drehzahl rotierenden Mähwerkzeuge dieser Mähwerke, besteht eine besondere Gefährdung für Mensch, Tier und Gegenstände durch Steine und andere Körper, welche von den Mähwerkzeugen erfasst und mit hoher Geschwindigkeit fortgeschleudert werden.

Insbesondere zum Schutz von Personen vor Wurfkörpern und dem ungewollten Eingriff in die Mähwerkzeuge, sind CE-Richtlinien und Sicherheitsvorschriften, wie die der DIN EN ISO 4254-12 bei der Ausführung der Maschinen zu beachten. Nach diesen Vorschriften sind Sicherheitseinrichtungen in vorgegebenen Mindestabständen zu den sich drehenden Maschinenteilen, insbesondere den Mähwerkzeugen vorgesehen, welche die Gefährdung durch fortgeschleuderte Gegenstände und durch Eingriff möglichst ausschließen sollen.

Sicherheitseinrichtungen an Kreiselmähwerken zum Schutz gegen Wurfkörper und vor Berührung der Mähwerkzeuge werden bevorzugt in Kombination von oberen festen Blechabdeckungen und daran befestigten, sich bis zum Erdboden erstreckenden umlaufenden flexiblen, vorzugsweise als Tücher ausgebildeten Sicherheitselementen ausgeführt. Im Sinne einer möglichst dauerhaften Wirkung der Sicherheitstücher müssen die Tücher selbst und auch deren Befestigung besonderen Anforderungen entsprechen, welche bei den bekannten Ausführungen oft einen hohen Montageaufwand verursachen.

Die DE8521683 offenbart ein Kreiselmähwerk gemäß dem Oberbegriff des Anspruchs 1.

Um die Sicherheitsabdeckungen allgemein und insbesondere den Befestigungsbereich der Tücher vor Beschädigungen durch äußere Einwirkungen zu schützen, sind Schutzeinrichtungen bekannt, welche durch ihre vorgelagerte Anbringung den direkten Kontakt der Sicherheitseinrichtungen mit Hindernissen verhindern sollen. Der Kontakt mit Hindernissen sollte zwar grundsätzlich vermieden werden, aber durch die hohe Fahrgeschwindigkeit beim Mähen und die über die Mähwerkzeuge hinausragenden Sicherheitseinrichtungen kommt es immer wieder zu Berührungen mit Hindernissen wie beispielsweise Bäumen, Hecken, Zäunen oder Mauern.

Aus der Praxis sind verschiedene Ausführungen von Schutzeinrichtungen für Sicherheitseinrichtungen von Kreiselmähwerken bekannt. Bevorzugt werden den Sicherheitsabdeckungen vorgelagerte Rohrbügel eingesetzt, wobei diese über Befestigungspunkte mit den Sicherheitsabdeckungen verbunden sind. Bei leichten Kontakten mit insbesondere nachgiebigen Hindernissen wirken diese Schutzbügel als Abweiser und verhindern Beschädigungen besonders an den Sicherheitstüchern und deren Befestigung. Bei stärkeren Kollisionen jedoch und bei Kontakten mit nicht nachgiebigen Hindernissen, kommt es häufig zu bleibenden Verformungen an den Schutzbügeln und durch die Übertragung an den Befestigungspunkten auch an den Sicherheitsabdeckungen.

Aufgabe der Erfindung ist es daher, ein Kreiselmähwerk mit Schutzeinrichtungen bereitzustellen, welche durch Kollisionen mit Hindernissen keine bleibende Verformung erfahren und einen verbesserten Schutz der Sicherheitseinrichtungen darstellen.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Darstellungen eines Ausführungsbeispiels in den Figuren zu entnehmen.

Die Erfindung sieht vor, die Schutzeinrichtungen aus dauerelastisch verformbarem Material auszuführen, welches die Aufprallenergie durch den Kontakt mit einem Hindernis komplett, oder aber zumindest zu einem großen Teil absorbiert und durch die großflächige Anlage zur Befestigungsfläche der Maschine, an den Maschinenbauteilen Schäden vermeidet. Da in den meisten Fällen die obere Sicherheitsabdeckung der Maschine direkt die Befestigungsfläche für die Schutzeinrichtung darstellt, ist die großflächige Anlage von besonderem Vorteil. Besonders vorteilhaft ist eine zweiteilige Ausführung der Schutzeinrichtungen, wobei der Grundkörper die Anlage und die Befestigung zur Maschine herstellt. Dieser kann geschraubt, genietet oder aufgrund der großflächigen Anlage auch geklebt werden. Das Material des Grundkörpers ist dabei unerheblich, es bietet sich jedoch vorteilhaft eine verformbare Ausführung zur Anpassung an Außenkonturen des Mähwerks besonders an. Erfindungsgemäß weist die Schutzeinrichtung ein Profil zur formschlüssigen Aufnahme weiterer Sicherheitseinrichtungen auf. Derartige nach außen hin offene Längsprofile zur formschlüssigen Verbindung zweier Bauteile sind aus diversen Bereichen in einer besonderen Form allgemein als Kederprofile bekannt. Diese Verbindungsart bietet sich an um ein biegeelastisches Teil, wie eine Plane, ein Tuch, oder dergleichen, besonders haltbar an eine vorgegebene Kontur zu befestigen. Das biegeelastische Teil wird dazu an der zu befestigenden Außenkante mit einem Gegenprofil in der Art einer Schnur oder Wulst versehen, wodurch nach dem Einziehen in das Grundprofil eine besonders haltbare Verbindung zwischen den Bauteilen hergestellt ist. Somit bietet die Schutzeinrichtung des erfindungsgemäßen Kreiselmähwerks eine besonders sichere aber kostengünstige und mit minimalem Montageaufwand zu montierende, aber den Vorschriften entsprechende Anbringung der Sicherheitstücher an. Gegenüber den aus dem Stand der Technik bekannten Schraubbefestigungen ergibt sich ein erheblicher Festigkeitsvorteil durch Umgehung der Ausrissgefahr an den Befestigungspunkten.

Bei einer mehrteiligen Ausführung der Schutzeinrichtung bietet es sich an, dass Aufnahmeprofil am Grundkörper vorzusehen. Besonders wirtschaftlich kann der Grundkörper dann als endloses Strangpress- oder Ziehprofil hergestellt werden, wobei das Profil vorteilhaft dann auch gleichzeitig Aufnahmekonturen zur formschlüssigen Aufnahme des elastischen Schutzelementes aufweist.

Dieser außen liegende Bereich der Schutzeinrichtung hat im Falle einer Kollision direkten Kontakt mit dem Hindernis und stellt somit den Wirkbereich der Schutzeinrichtung dar. Der Wirkbereich, welcher in der mehrteiligen Ausführung der Schutzeinrichtung vorteilhaft dem gesamten Schutzkörper entspricht, ist aus dauerelastisch verformbaren

Materialien in diversen Ausführungen und Formen denkbar. Besonderes Augenmerk sollte jedoch auf die Eigenschaften möglichst viel Aufprallenergie absorbieren zu können, hohe Abriebfestigkeit aufzuweisen und eine gute Rückverformung in seine Ausgangsform nach dem Kontakt mit einem Hindernis gelegt werden.

Somit bietet die Schutzeinrichtung des erfindungsgemäßen Kreiselmähwerks einen optimalen Schutz der Sicherheitseinrichtungen und sichert deren Wirksamkeit dauerhaft.

Eine detaillierte Beschreibung des Gegenstandes der Erfindung erfolgt nun anhand eines Ausführungsbeispiels eines Kreiselmähwerks für den Frontanbau. In der Zeichnung stellt im Einzelnen dar:
**Fig. 1** eine perspektivische Darstellung eines erfindungsgemäßen Kreiselmähwerks für den Frontanbau an einem Schlepper oder ähnlichem Trägerfahrzeug;
**Fig. 2** eine vergrößerte Schnittdarstellung der montierten Schutzeinrichtung des Kreiselmähwerks nach Fig. 1.

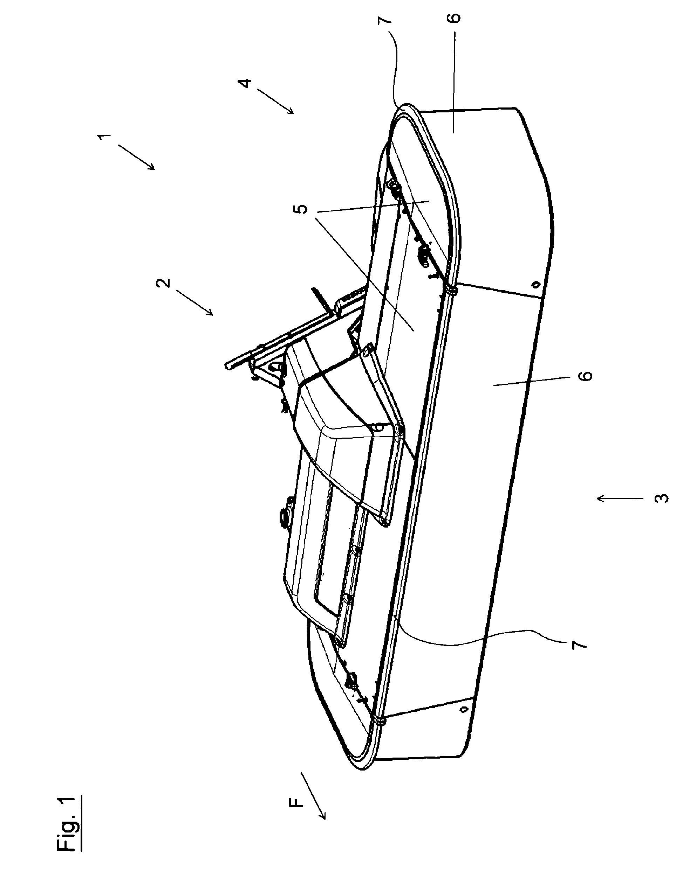

Das in Fig. 1 dargestellte Ausführungsbeispiel eines erfindungsgemäßen Kreiselmähwerks 1 ist als Frontmähwerk ausgeführt. Das Mähwerk 1 ist in allgemein bekannter Weise mit seinem Anbaubock 2 an die Fronthubeinrichtung eines nicht dargestellten Schleppers oder ähnlichen geeigneten Trägerfahrzeugs koppelbar und wird über eine Antriebswelle auch von diesem angetrieben. Die nicht sichtbare Mäheinrichtung 3, welche sich in der Regel zumindest über die gesamte Breite des Schleppers erstreckt, ist komplett durch Sicherheitseinrichtungen 4 abgedeckt. Diese sollen zum einen den Zugriff auf die drehenden Teile der Mäheinrichtung 3 verhindern und zum anderen die Gefährdung durch fortgeschleuderte Gegenstände zumindest verringern.

Bevorzugt werden die oberen Sicherheitseinrichtungen, wie auch beim Mähwerk 1 des Ausführungsbeispiels, als feste Sicherheitsabdeckungen 5 aus Blech ausgeführt. Die seitlichen, die Mäheinrichtung 3 umschließenden Sicherheitseinrichtungen 4 sind grundsätzlich flexibel ausgeführt, um den Einlass und Auswurf des Mähgutes nicht zu behindern. Wie im Ausführungsbeispiel, werden dazu bevorzugt gewebeverstärkte Planen als Sicherheitstücher 6 eingesetzt. Da die Sicherheitseinrichtungen 4 einen vorgeschriebenen Abstand zur Mäheinrichtung 3 aufweisen müssen, sind insbesondere die oberen Sicherheitsabdeckungen 5 besonders kollisionsgefährdet. Zum Schutz vor Beschädigungen durch den Kontakt mit Hindernissen, welcher insbesondere beim Mähen an Feldrändern immer wieder vorkommt, sind den Sicherheitseinrichtungen 4 des erfindungsgemäßen Kreiselmähwerks 1 in Fig. 1 an der Vorderseite in Fahrt- und Arbeitsrichtung F gesehen und an den Seiten Schutzeinrichtungen 7 zugeordnet.

In Fig. 1 ist auch gut zu erkennen, wie diese Schutzeinrichtungen 7 den Sicherheitseinrichtungen 4 vorgeordnet sind und dadurch im Falle von Kollisionen den Kontakt zwischen Hindernis und Sicherheitseinrichtung 4 verhindern.

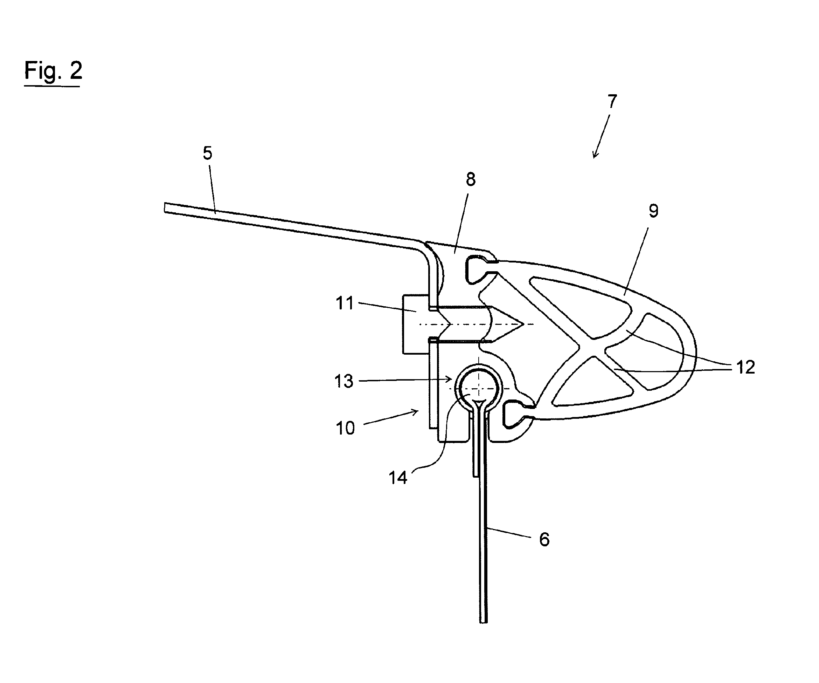

Fig. 2 stellt die Schutzeinrichtung 7 im Detail dar. Die Schutzeinrichtung 7 ist in diesem Fall zweiteilig ausgeführt und besteht aus dem Grundkörper 8 und dem Schutzkörper 9. Beide sind formschlüssig miteinander verbunden und durch ihre Verformbarkeit der Außenkontur der Sicherheitsabdeckung 5 genau angepasst. In Fig. 2 ist die besonders einfache und vorteilhafte Befestigung der Schutzeinrichtung 7 direkt an einer Außenabkantung 10 der Sicherheitsabdeckung 5 gut erkennbar. Die Befestigung ist hier mittels selbstschneidender Blechschrauben 11 sehr montagefreundlich ausgeführt. Ebenfalls gut erkennbar ist die großflächige Anlage des Grundkörpers 8 an die Außenabkantung 10, wodurch äußere Krafteinwirkungen auf die Schutzeinrichtung 7, welche nicht von dieser vollkommen absorbiert werden, so großflächig auf die Sicherheitsabdeckung 5 einwirken, dass sie keine Schäden mehr verursachen.

Damit die Schutzeinrichtung 7 möglichst großen Schutz bietet, ist der Schutzkörper 9 als dauerelastisches Mehrkammer-Hohlprofil mit Innenstegen 12 ausgeführt, wodurch einerseits eine optimale Verformbarkeit und andererseits eine gute Rückverformbarkeit gewährleistet ist.

Der Grundkörper 8 bietet durch seine Profilierung auch noch einen Zusatznutzen. Durch das schlüssellochartige, nach unten offene Profil 13, welches allgemein bei anderen Anwendungen auch als Kederprofil bekannt ist, wird eine sehr gute Befestigungsmöglichkeit für die Sicherheitstücher 6 bereitgestellt.

Die an ihrer Oberkante mit einem "Keder" 14 versehenen Sicherheitstücher 6 können so werkzeuglos und ohne rissgefährdete Klemm- und Schraubstellen sehr einfach und dauerhaft montiert werden.

Dieser Zusatznutzen bietet einen erheblichen Sicherheitsvorteil des erfindungsgemäßen Kreiselmähers.

Auch wenn das Ausführungsbeispiel die Erfindung anhand eines Frontmähwerks verdeutlicht, so ist diese ebenfalls auf im Zwischenachsbereich oder am Heck angebaute, gezogene oder aufgesattelte Kreiselmähwerke anwendbar.

## Patentansprüche

1. Kreiselmähwerk (1) zum Ernten von stehendem Erntegut mit Sicherheitseinrichtungen (4) zum Schutz gegen Wurfkörper und Berührung der Mähwerkzeuge, welche zumindest teilweise aus biegeelastischen Elementen bestehen, wobei den Sicherheitseinrichtungen (4) zumindest bereichsweise Schutzeinrichtungen (7) zu deren Schutz vor Beschädigungen durch äußere Einflüsse zugeordnet sind, die zur formschlüssigen Aufnahme von biegeelastischen Sicherheitseinrichtungen (4) ausgebildet sind, **dadurch gekennzeichnet, dass** die Schutzeinrichtungen (7) zumindest in ihrem Wirkbereich dauerelastisch verformbar sind.

2. Kreiselmähwerk (1) nach Anspruch 1, **dadurch gekennzeichnet, dass** die Schutzeinrichtungen (7) ein Energie absorbierendes, elastisch verformbares Hohlprofil aufweisen.

3. Kreiselmähwerk (1) nach zumindest einem der vorhergehenden Ansprüche, **dadurch gekennzeichnet, dass** die Schutzeinrichtungen (7) in ihrem Befestigungsbereich eine in ihrer Längserstreckung unterbrechungsfreie Anlage zu dem die Schutzeinrichtung haltenden Maschinenteil aufweisen.

4. Kreiselmähwerk (1) nach zumindest einem der vorhergehenden Ansprüche, **dadurch gekennzeichnet, dass** die Schutzeinrichtungen (7) mehrteilig ausgebildet sind.

5. Kreiselmähwerk (1) nach Anspruch 4, **dadurch gekennzeichnet, dass** die mehrteiligen Schutzeinrichtungen (7) zumindest einen Grundkörper (8) und einen Schutzkörper (9) aufweisen.

6. Kreiselmähwerk (1) nach dem vorhergehenden Anspruch, **dadurch gekennzeichnet, dass** der Grundkörper (8) der Schutzeinrichtung (7) eine Befestigungsmöglichkeit zur formschlüssigen Aufnahme von biegeelastischen Sicherheitseinrichtungen (4) bereitstellt.

7. Kreiselmähwerk (1) nach Anspruch 5 oder 6, **dadurch gekennzeichnet, dass** der Schutzkörper (9) der mehrteiligen Schutzeinrichtung (7) aus dauerelastischem Material besteht.

8. Kreiselmähwerk (1) nach Anspruch 7, **dadurch gekennzeichnet, dass** der Schutzkörper (9) der mehrteiligen Schutzeinrichtung (7) als elastisch verformbares Hohlprofil ausgebildet ist.

9. Kreiselmähwerk (1) nach zumindest einem der Ansprüche 5 bis 8, **dadurch gekennzeichnet, dass** der Schutzkörper (9) der mehrteiligen Schutzeinrichtung (7) für eine formschlüssige Verbindung mit dem Grundkörper (8) ausgebildet ist.

## Claims

1. Rotary mower (1) for harvesting upright crops, comprising safety devices (4) for protecting against thrown objects and against the mowing tools being touched, which safety devices consist at least in part of flexurally resilient elements, protection devices (7) for protecting the safety devices (4) against damage owing to outside influences being assigned thereto, at least in regions, which protection devices are formed such that they receive flexurally resilient safety devices (4) in an interlocking manner, **characterised in that** the protection devices (7) are permanently elastically deformable, at least in their operating region.

2. Rotary mower (1) according to claim 1, **characterised in that** the protection devices (7) have an energy-absorbing, elastically deformable hollow profile.

3. Rotary mower (1) according to at least one of the preceding claims, **characterised in that**, in their fixing region, the protection devices (7) are in contact, in a manner which is continuous in their longitudinal extension, with the machine part which holds the protection device.

4. Rotary mower (1) according to at least one of the preceding claims, **characterised in that** the protection devices (7) are formed of more than one part.

5. Rotary mower (1) according to claim 4, **characterised in that** the multi-part protection devices (7) comprise at least a main body (8) and a protection body (9).

6. Rotary mower (1) according to the preceding claim, **characterised in that** the main body (8) of the protection device (7) allows flexurally resilient safety devices (4) to be received in an interlocking manner for fixing.

7. Rotary mower (1) according to either claim 5 or claim 6, **characterised in that** the protection body (9) of the multi-part protection device (7) consists of permanently resilient material.

8. Rotary mower (1) according to claim 7, **characterised in that** the protection body (9) of the multi-part protection device (7) is formed as an elastically deformable hollow profile.

9. Rotary mower (1) according to at least one of claims 5 to 8, **characterised in that** the protection body (9) of the multi-part protection device (7) is formed so as to interlock with the main body (8).

## Revendications

1. Faucheuse rotative (1) pour permettre la récolte de produits agricoles verticaux comprenant des dispositifs de sécurité (4) permettant la protection contre des corps projetés et le contact avec l'outil faucheur, qui sont constitués au moins partiellement d'éléments élastiquement flexibles, aux dispositifs de sécurité (4) étant associés au moins par zones des dispositifs de protection (7) pour garantir leur protection contre des détériorations par des facteurs extérieurs, qui sont réalisés pour la réception par une liaison par la forme de dispositifs de sécurité (4) élastiquement flexibles,
**caractérisée en ce que**
les dispositifs de protection (7) sont élastiquement déformables en permanence au moins dans leur zone d'action.

2. Faucheuse rotative (1) conforme à la revendication 1,
**caractérisée en ce que**
les dispositifs de protection (7) présentent un profil creux élastiquement déformable absorbant l'énergie.

3. Faucheuse rotative (1) conforme à au moins l'une des revendications précédentes,
**caractérisée en ce que**
les dispositifs de protection (7) s'appuient, dans leur zone de fixation, sans interruption sur leur extension longitudinale sur la partie de machine maintenant le dispositif de protection.

4. Faucheuse rotative (1) conforme à au moins l'une des revendications précédentes,
**caractérisée en ce que**
les dispositifs de protection (7) sont réalisés en plusieurs parties.

5. Faucheuse rotative (1) conforme à la revendication 4,
**caractérisée en ce que**
les dispositifs de protection (7) en plusieurs parties comportent au moins un corps de base (8) et un corps de protection (9).

6. Faucheuse rotative (1) conforme à la revendication précédente,
**caractérisée en ce que**
le corps de base (8) du dispositif de protection (7) fournit une possibilité de fixation pour la réception par une liaison par la forme de dispositifs de sécurité (4) élastiquement flexibles.

7. Faucheuse rotative (1) conforme à la revendication 5 ou 6,
**caractérisée en ce que**
le corps de protection (9) du dispositif de protection en plusieurs parties (7) est réalisé en un matériau à élasticité permanente.

8. Faucheuse rotative (1) conforme à la revendication 7,
**caractérisée en ce que**
le corps de protection (9) du dispositif de protection en plusieurs parties (7) est réalisé sous la forme d'un profil creux élastiquement déformable.

9. Faucheuse rotative (1) conforme à au moins l'une des revendications 5 à 8,
**caractérisée en ce que**
le corps de protection (9) du dispositif de protection en plusieurs parties (7) est réalisé pour permettre une liaison par la forme avec le corps de base (8).
